# EUROPEAN PATENT SPECIFICATION

(11) **EP 3 451 266 B1**
(45) Date of publication and mention of the grant of the patent: **29.04.2026**
(21) Application number: 17306120.1
(22) Date of filing: 31.08.2017
(51) Int. Cl.: G06Q 30/018

(54) **A METHOD OF CHECKING AUTHENTICITY OF AN OPTICAL ARTICLE, A CORRESPONDING APPARATUS**
VERFAHREN ZUR PRÜFUNG DER AUTHENTIZITÄT EINES OPTISCHEN ARTIKELS, ENTSPRECHENDE VORRICHTUNG
PROCÉDÉ PERMETTANT DE VÉRIFIER L'AUTHENTICITÉ D'UN ARTICLE OPTIQUE, APPAREIL CORRESPONDANT

(43) Date of publication of application: 06.03.2019
(73) Proprietor: Essilor International, 94220 Charenton-le-Pont (FR)
(72) Inventor: MAURICE, Sebastien, 94220 Charenton-le-Pont (FR); FERREIRA, Daniel, 94220 Charenton-le-Pont (FR); ARROUY, Frédéric, 94220 Charenton-le-Pont (FR); AUFFRAY, Stéphane, 94220 Charenton-le-Pont (FR)
(74) Representative: Jacobacci & Partners France

(56) References cited:
- WO-A1-99/17230
- WO-A2-2006/100581
- CN-A- 105 426 947
- US-A1- 2012 041 887
- US-A1- 2014 158 754

## Description

### TECHNICAL FIELD OF THE INVENTION

The invention is concerned with optical articles, comprising for instance a frame and/or an optical lens.

More precisely the invention relates to a method of checking authenticity of an optical article, a corresponding apparatus, a method of providing a confirmation of authenticity of an optical article and a corresponding server.

### BACKGROUND INFORMATION AND PRIOR ART

It has been sought to confirm authenticity of an optical article to the wearer of this optical article both to ensure that the optical article (in particular an ophthalmic lens included in the optical article) is suited to the wearer's sight and to confirm that the optical article is a genuine product (in particular for the frame which is generally produced by a particular brand).

Conventional paper certificates may be used in this goal, but could be forged or applied to counterfeit articles by unscrupulous people.

Document US 2014/1 58 754 describes a system for checking authenticity of a consumer product, such as a dress, using a tag connectable to the product.

Document CN 105 426 947 describes a solution for providing a lens with an anti-counterfeiting mark.

### SUMMARY OF THE INVENTION

In this context, the invention provides a method of checking authenticity of an optical article as defined in appended claim 1.

The authentication is thus based on the identifier carried by the lens and cannot be forged. In particular, as will be explained below, even when the optical article includes a frame, authenticity can be checked using the above-mentioned identifier carried by the lens, which cannot easily be counterfeited.

Possible optional features of this method are as follows:
- said optical article is said lens or a frame and said lens;
- the user terminal also receives from said remote server a frame description associated to said identifier in said database;
- said lens is an ophthalmic lens or, as a possible variation, a plano lens (such as lenses for sunglasses);
- the user terminal sends the request to a predetermined address;
- the user terminal sends the request to an address determined based on at least part of the identifier;
- the request also contains personal information relating to a wearer of the optical article;
- the request also contains localization information;
- the electronic device receives and displays additional information on said optical article;
- said marking is a two-dimension code carried by the lens (or, according to a possible variation, a hologram).

The invention also provides a user terminal for checking authenticity of an optical article as defined in appended claim 10.

### DETAILED DESCRIPTION OF EXAMPLE(S)

The invention will be better understood in light of the appended drawings, where:
- Figure 1 shows an exemplary system in which the invention may be implemented;
- Figure 2 illustrates the main steps of a method according to an embodiment of the invention.

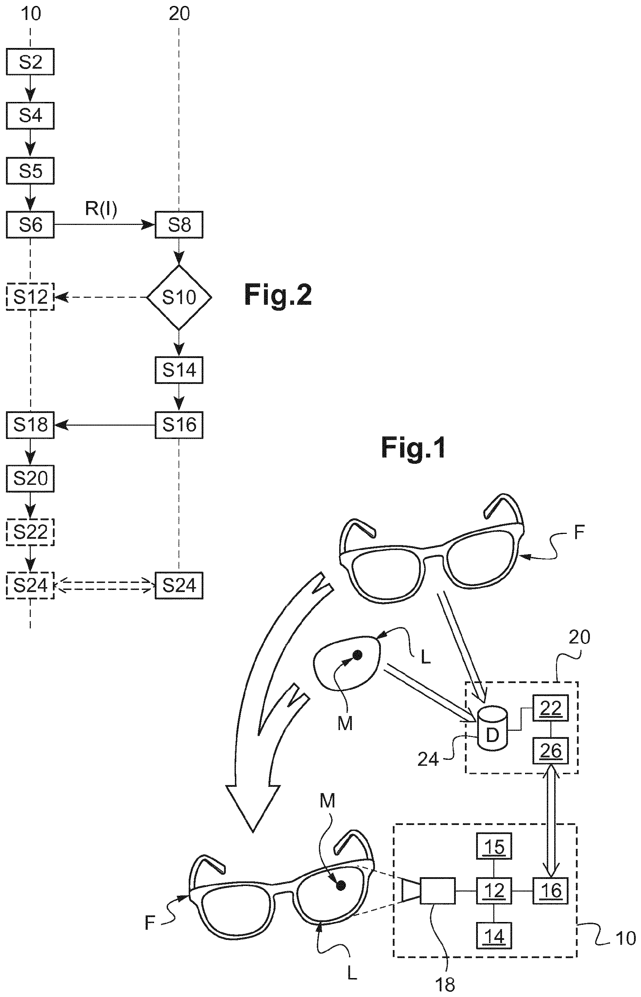

Figure 1 shows an exemplary system in which the invention may be implemented.

This system comprises a user terminal 10 and a remote server 20.

The user terminal 10 is an electronic device connectable to a network, for instance a personal computer, a tablet computer or a smartphone.

The user terminal 10 comprises a control unit 12 (e.g. a microprocessor), a storage unit 14 (e.g. a solid state memory), a user interface 15 (such as a touchscreen), a communication circuit 16 and an image sensor 18.

The storage unit 14 stores computer programs comprising instructions which cause the control unit 12 to implement methods, including the method described below referring to Figure 2, when these instructions are executed by the control unit 12.

The remote server 20 comprises a control unit 22, a storage unit 24 storing a database D and a communication interface 26. The database D stores identifiers of authentic lenses as explained below.

The communication circuit 16 of the user terminal 10 and the communication interface 26 of the remote server 20 are designed to exchange data over digital networks, which may include a local area network and/or a wireless telephone network and/or a wide area network (such as the Internet).

Thus, the control unit 12 of the user terminal 10 and the control unit 22 of the remote server 20 can exchange data via the communication circuit 16 and the communication interface 26,for instance as described below.

The invention aims at confirming authenticity of a lens L (here an ophthalmic lens, but also possibly another type of lens, such as a plano lens), or authenticity of a frame F associated with this lens L, to the user of the user terminal 10.

In this goal, during manufacture of the (here ophthalmic) lens L, an identifier I (for instance a unique identifier, *i.e.* an identifier uniquely associated with the lens L) is associated with this lens L and embedded in this lens L, for instance by forming a marking M corresponding to the identifier I on (or within) the lens L.

The marking M may for instance be engraved on the external surface of the lens L during the manufacturing process. This marking M is for instance produced as described in the patent application published under reference WO 2015/040 338. According to a possible variation, the marking is internal to the initial ophthalmic lens, such as proposed in the patent application published under reference WO 2014/131 878.

The marking M may have the form of a two-dimension code, such as a data matrix or a QR code. As a possible variation, the marking could be a hologram, for instance.

In another embodiment, the identifier is contained in an RFID chip affixed to the lens. In this embodiment, the identifier is acquired by using an RFID reader (instead of the image sensor 18).

The identifier I embedded in the lens L is recorded in the database D stored in the storage unit 24, possibly in association with a description of the lens L. The description of the lens L may include optical characteristics (defining at least one surface of the lens L) and/or mechanical characteristics (such as dimensions of the lens L) and/or characteristics defining the material of the lens L.

When the lens L is sold mounted in a frame F (with another lens), a description of the frame F (and possibly of the other lens) may also be recorded in the database D in association with the identifier I, for instance at the time of assembling the optical article or when delivering the optical article.

Additional data, such as personal data of the wearer, may also be recorded in the database D in association with the identifier I.

The optical article (lens L or frame F equipped with lens L) can then be shipped to the user (or to the retailer where delivery to the user is planned).

Figure 2 illustrates the main steps of a method according to an embodiment of the invention.

This method begins at step S2 when the user (generally the wearer of the optical article just mentioned, or an optician, possibly in the presence of the wearer) launches an application for checking authenticity on the user terminal 10. This is done for instance by selecting a specific icon on the user interface 15 of the user terminal 10, which triggers execution of the application by the control unit 12 of the user terminal 10.

As a possible variation, the user terminal 10 could connect to a website (under directions from the user), for instance a website hosted by the remote server 20.

The image sensor 18 then captures at step S4 the marking M carried by the lens L (which lens L is at least part of the optical article as mentioned above). This step S4 is for instance performed under the control of the control unit 12 executing the application mentioned above, possibly with the help of the user directing the image sensor 18 towards the initial optical article L (as schematically shown in Figure 1).

Thus, in a step S5, the control unit 12 of the user terminal 10 determines the identifier I based on the captured marking M (using decoding rules of the concerned code).

The control unit 12 can then send an authenticity request R, including the identifier I, to the remote server 20 (using the communication circuit 16) at step S6.

To send the authenticity request R to the remote server 20, the control unit 12 may for instance use a predetermined address (e.g. a Uniform Resource Locator or URL), stored for instance in the storage unit 14.

As a possible variation, the control unit 12 may determine an address based on at least part of the identifier I and send the authenticity request R to the remote server 20 using the thus determined address.

In addition, the authenticity request R may include personal information relating to the wearer of the optical article (i.e. the user of the user terminal 10) or localization information (also relating to the wearer of the optical article).

The remote server 20 (precisely the control unit 22 of the remote server 20) receives the authenticity request R with the identifier I (via the communication interface 26) at step S8.

The control unit 22 then looks for the identifier I in the database D stored in the storage unit 24 (step S10).

In case the control unit 22 fails to detect the identifier I received with the authenticity request R in the database D, this would mean that the optical article is not authentic. The control unit 22 could then command the communication interface 26 to send an error message to the user terminal 10 such that, upon receiving this error message, the control unit 12 of the user terminal 10 orders display on the user interface 15 of a message indicating failure to authenticate the optical article (step S12). Such a message could read: "YOUR OPTICAL ARTICLE IS NOT AUTHENTIC", for instance.

If the control unit 22 retrieves (i.e. finds) the identifier I received with the authenticity request R in the database D, the control unit 22 retrieves the description of the optical article, i.e. of the lens(es) and/or of the frame, associated with this identifier I (step S14). (It could also be checked at this stage whether the personal information included in the authenticity request R corresponds to expected information, stored for instance in the database D in association with the identifier I, in order to strengthen the authenticity check.)

The control unit 22 then commands at step S16 the communication interface 26 to send a message confirming retrieval of the identifier I in the database D. In practice, this message also includes at least part of the description of the optical article retrieved during step S14.

Upon receiving this message (via the communication circuit 16) at step S18, the control unit 12 of the user terminal 10 commands the user interface 15 to display a message confirming authenticity of the optical article (step S20). For instance, this message could read: "YOUR OPTICAL ARTICLE IS AUTHENTIC".

The control unit 12 may also control the user interface 15 to display in addition features of the optical article taken from the description of the optical article received with the message at step S18.

These features may include for instance:
- purchasing conditions relating to the optical article;
- a lens description and/or a lens identification;
- an authenticity card, including the wearer name, the optician shop/location, the prescription for the wearer, the name of the product, the type of optical design, coatings, and any other product description;
- a frame description;
- pictures of the frame;
- frame & lens association (including for instance pictures and/or a lens shape trace);
- personal data of the wearer;
- location of previous authenticity requests received by the remote server 20 with the identifier I (including for instance for each previous authenticity request: its date, the location from where it originated, means used to perform the request);
- an history of accesses to the database D with the identifier I.

It may be reminded here that these data were recorded in the database D in association with the identifier I during manufacturing and/or assembly and/or delivery of the optical article, as explained above.

Thanks to these features of the genuine optical article displayed on the user interface 15, the user may further check that his/her optical product effectively corresponds to an authentic product.

For instance, when the optical article includes a frame, the description received in the message at step S18 and displayed on the user interface 15 at step S20 could include a serial number of the frame (marked for instance on the earpiece of the frame) so that the user can check he/she was effectively delivered the genuine frame he/she had ordered.

In a further optional step S22, the control unit 12 may control the user interface 15 to display available services in connection with the optical article identified by the identifier I.

The available services proposed to the user may be selected depending on the user's location.

According to a possible embodiment, the services proposed to the user are selected by the control unit 22 of the remote server 20 based on the localization information received with the authenticity request at step S8 and data designating the selected services are transmitted from the remote server 20 to the user terminal 10 so that the user terminal 10 may display information relating to the selected services.

According to another optional step S24, the user (here the wearer) may manage his/her personal data recorded in the database D in association with the identifier I, for instance in order to enrich the personal data, to delete at least part of the personal data, or to modify some of the personal data.

In practice, the personal data are managed by the user performing actions on the user interface 15, by the control unit 12 of the user terminal 10 detecting these actions and sending corresponding instructions to the control unit 22 of the remote server 20 (via the communication circuit 16 and the communication interface 26) and by the control unit 22 altering the data in the database D stored in the storage unit 24.

## Claims

1. A method of checking authenticity of an optical article (L; F, L) including at least a lens (L), wherein the lens carries a marking (M) corresponding to an identifier (I), wherein the marking has been engraved on the external surface of the lens (L) during manufacturing, said method comprising the following steps:
- capturing (S4) the marking (M) carried by the lens (L) using an image sensor (18) of a user terminal (10);
- sending (S6), by the user terminal (10), a request (R) containing the identifier (I) to a remote server (20);
- receiving (S18), by the user terminal (10) and from the remote server (20), an information indicating retrieval of the identifier (I) in a database (D);
- displaying (S20), on a display (15) of the user terminal (10), an indication of authenticity of the optical article (L; F, L).

2. The method according to claim 1, wherein said optical article is said lens (L).

3. The method according to claim 1, wherein said optical article (F, L) comprises a frame (F) and said lens (L).

4. The method according to claim 3, wherein the user terminal (10) also receives from said remote server (20) a frame description associated to said identifier (I) in said database (D).

5. The method according to any of claims 1-4, wherein said lens (L) is an ophthalmic lens.

6. The method according to any of claims 1-5, wherein the user terminal (10) sends the request (R) to a predetermined address.

7. The method according to any of claims 1-5, wherein the user terminal (10) sends the request (R) to an address determined based on at least part of the identifier (I).

8. The method according to any of claims 1-7, wherein the request (R) also contains personal information relating to a wearer of the optical article.

9. The method according to any of claims 1-8, wherein said marking (M) is a two-dimension code carried by the lens (L).

10. A user terminal (10) for checking authenticity of an optical article (L; **F,** L) including at least a lens (L), said user terminal (10) comprising:
- an image sensor (18) adapted to capture a marking (M) carried by the lens (L), wherein said marking corresponds to an identifier (I)**,** wherein said marking has been engraved on the external surface of the lens (L) during manufacturing;
- a communication circuit (16) adapted to send a request (R) containing the identifier (I) to a remote server (20) and to receive, from the remote server (20), an information indicating retrieval of the identifier (I) in a database (D); and
- a user interface (15) adapted to display an indication of authenticity of the optical article (L; F, L).

## Patentansprüche

1. Verfahren zum Prüfen der Authentizität eines optischen Artikels (L; F, L), der mindestens eine Linse (L) beinhaltet, wobei die Linse eine Markierung (M) trägt, die einer Kennung (I) entspricht, wobei die Markierung während der Herstellung auf die Außenfläche der Linse (L) graviert wurde, wobei das Verfahren die folgenden Schritte umfasst:
- Erfassen (S4) der von der Linse (L) getragenen Markierung (M) unter Verwendung eines Bildsensors (18) eines Benutzerendgeräts (10);
- Senden (S6) einer Anforderung (R), welche die Kennung (i) enthält, von dem Benutzerendgerät (10) an einen fernen Server (20);
- Empfangen (S18), in dem Benutzerendgerät (10) und von dem fernen Server (20), einer Information, die auf ein Abrufen der Kennung (I) aus einer Datenbank (D) hinweist;
- Anzeigen (S20), auf einer Anzeige (15) des Benutzerendgeräts (10), eines Hinweises der Authentizität des optischen Artikels (L; F, L).

2. Verfahren nach Anspruch 1, wobei der optische Artikel die Linse (L) ist.

3. Verfahren nach Anspruch 1, wobei der optische Artikel (F, L) ein Gestell (F) und die Linse (L) umfasst.

4. Verfahren nach Anspruch 3, wobei das Benutzerendgerät (10) von dem fernen Server (20) auch eine Gestellbeschreibung empfängt, die mit der Kennung (I) in der Datenbank (D) assoziiert ist.

5. Verfahren nach einem der Ansprüche 1 bis 4, wobei die Linse (L) ein Brillenglas ist.

6. Verfahren nach einem der Ansprüche 1 bis 5, wobei das Benutzerendgerät (10) die Anforderung (R) an eine vorbestimmte Adresse sendet.

7. Verfahren nach einem der Ansprüche 1 bis 5, wobei das Benutzerendgerät (10) die Anforderung (R) an eine Adresse sendet, die basierend auf mindestens einem Teil der Kennung (i) ermittelt wird.

8. Verfahren nach einem der Ansprüche 1 bis 7, wobei die Anforderung (R) auch persönliche Informationen in Bezug auf einen Träger des optischen Artikels enthält.

9. Verfahren nach einem der Ansprüche 1 bis 8, wobei die Markierung (M) ein zweidimensionaler Code ist, der von der Linse (L) getragen wird.

10. Benutzerendgerät (10) zum Prüfen einer Authentizität eines optischen Artikels (L; F, L), der mindestens eine Linse (L) beinhaltet, wobei das Benutzerendgerät (10) umfasst:
- einen Bildsensor (18), der geeignet ist zum Erfassen einer Markierung (M), die von der Linse (L) getragen wird, wobei die Markierung einer Kennung (I) entspricht, wobei die Markierung während der Herstellung auf die Außenfläche der Linse (L) graviert wurde;
- eine Kommunikationsschaltung (16), die geeignet ist zum Senden einer Anforderung (R), welche die Kennung (I) enthält, an einen entfernten Server (20) und zum Empfangen von dem fernen Server (20) einer Information, die auf ein Abrufen der Kennung (I) aus einer Datenbank (D) hinweist; und
- eine Benutzeroberfläche (15), die geeignet ist zum Anzeigen eines Hinweises auf die Authentizität des optischen Artikels (L; F, L).

## Revendications

1. Procédé de vérification d'authenticité d'un article d'optique (L ; F, L) comportant au moins une lentille (L), la lentille portant un marquage (M) correspondant à un identifiant (I), le marquage ayant été gravé sur la surface externe de la lentille (L) lors de la fabrication, ledit procédé comprenant les étapes suivantes :
- capture (S4) du marquage (M) porté par la lentille (L) en utilisant un capteur d'image (18) d'un terminal utilisateur (10) ;
- envoi (S6), par le terminal utilisateur (10), d'une requête (R) contenant l'identifiant (I) à un serveur distant (20) ;
- réception (S18), par le terminal utilisateur (10) et en provenance du serveur distant (20), d'une information indiquant la récupération de l'identifiant (I) dans une base de données (D) ;
- affichage (S20), sur un affichage (15) du terminal utilisateur (10), d'une indication d'authenticité de l'article optique (L ; F, L).

2. Procédé selon la revendication 1, ledit article optique étant ladite lentille (L).

3. Procédé selon la revendication 1, ledit article optique (F, L) comprenant une monture (F) et ladite lentille (L).

4. Procédé selon la revendication 3, le terminal utilisateur (10) recevant également en provenance dudit serveur distant (20) une description de monture associée audit identifiant (I) dans ladite base de données (D).

5. Procédé selon l'une quelconque des revendications 1 à 4, ladite lentille (L) étant une lentille ophtalmique.

6. Procédé selon l'une quelconque des revendications 1 à 5, le terminal utilisateur (10) envoyant la requête (R) à une adresse prédéterminée.

7. Procédé selon l'une quelconque des revendications 1 à 5, le terminal utilisateur (10) envoyant la requête (R) à une adresse déterminée sur la base d'au moins une partie de l'identifiant (I).

8. Procédé selon l'une quelconque des revendications 1 à 7, la requête (R) contenant également des informations personnelles concernant un porteur de l'article optique.

9. Procédé selon l'une quelconque des revendications 1 à 8, ledit marquage (M) étant un code à deux dimensions porté par la lentille (L).

10. Terminal utilisateur (10) de vérification d'authenticité d'un article d'optique (L ; F, L) comportant au moins une lentille (L), ledit terminal utilisateur (10) comprenant :
- un capteur d'image (18) conçu pour capturer un marquage (M) porté par la lentille (L), ledit marquage correspondant à un identifiant (I), ledit marquage ayant été gravé sur la surface externe de la lentille (L) pendant la fabrication ;
- un circuit de communication (16) conçu pour envoyer une requête (R) contenant l'identifiant (I) à un serveur distant (20) et pour recevoir, en provenance du serveur distant (20), une information de récupération de l'identifiant (I) dans une base de données (D) ; et
- une interface utilisateur (15) conçue pour afficher une indication d'authenticité de l'article optique (L ; F, L).
